# EUROPEAN PATENT APPLICATION

(11) **EP 4 838 342 A2**
(43) Date of publication of application: **11.11.2026**
(21) Application number: 26207077.4
(22) Date of filing: 23.09.2026
(51) Int. Cl.: G06F 3/041, G06F 3/044

(54) **DISPLAY MODULE AND DISPLAY DEVICE**

(30) Priority: 28.04.2026 CN 202610575324
(71) Applicant: Wuhan China Star Optoelectronics Semiconductor Display Technology Co., Ltd., Wuhan, Hubei 430079 (CN)
(72) Inventor: WU, Rusong, Wuhan (CN); YAN, Longfei, Wuhan (CN); YU, Haijun, Wuhan (CN)
(74) Representative: Zhu, Puxing

(57) **Abstract**

A display panel and a display device are provided. In a planar top view of the display panel, a second edge of the second anti-peeping strip is superposed on one first electrode portion or exceeds one first electrode portion in a second direction. In the embodiments of the invention, the second edge of the second anti-peeping strip is superposed on one first electrode portion or exceeds one first electrode portion to elongate the second anti-peeping strip in the second direction, so as to increase the area of the second anti-peeping strip covering the second sub-pixel, thereby reducing the difference in light-emitting luminance between the first sub-pixel and the second sub-pixel at the specific viewing angle in the anti-peeping mode. Thus, the problem of color-conversion caused by relatively high luminance of the light emitted from the first sub-pixel and/or second sub-pixel at specific oblique viewing angles can be reduced.

## Description

### TECHNICAL FIELD

The invention relates to the field of display technology, and in particular, to a display panel and a display device.

### BACKGROUND

The organic light-emitting diode (OLED) is applied to the mobile phone, the tablet or the notebook computer and the like which has high requirements for privacy. Therefore, in recent years, development of anti-peeping screen gradually increased. The conventional anti-peeping screen blocks the light at large viewing angle by disposing the black matrix layer above anti-peeping pixels so as to realize anti-peeping; and in the non-anti-peeping mode, the opening of the black matrix layer is increased to retain the light at large viewing angle, thereby realizing switching between the shared mode and the anti-peeping mode.

However, in the design of real red-green-blue (real RGB) pixel, since the pixels are mostly square or rectangular, there is a problem of obvious color conversion when viewing the screen at an oblique angle (for example, ±45 degrees and/or ±135 degrees) in the anti-peeping mode.

### SUMMARY

Embodiments of the invention provide a display panel and a display device, to solve the above technical problems.

In order to achieve the above objective, according to a first aspect of the invention, a display panel is provided, including:
a light-emitting pixel layer including a plurality of anti-peeping pixels and a plurality of shared pixels, wherein each of the anti-peeping pixels includes a first sub-pixel, a second sub-pixel, and a third sub-pixel with different light-emitting colors, the first sub-pixel and the second sub-pixel are arranged along a second direction to form a first pixel column, a plurality of third sub-pixels are arranged along the second direction to form a second pixel column, and the first pixel column and the second pixel column are arranged along a first direction;
a touch electrode disposed on a light-emitting side of the light-emitting pixel layer and is disposed in a layer different from the light-emitting pixel layer, wherein the touch electrode includes a first electrode line extending along the first direction; in the second direction, the first electrode line is disposed between one of the anti-peeping pixels and one of the shared pixels that are adjacent to each other, and the first electrode line includes a first electrode portion located in a region of the first pixel column;
a first light-shielding layer disposed on a side of the touch electrode away from the light-emitting pixel layer and is disposed in a layer different from the touch electrode, and the first light-shielding layer is configured to shield part of emitted light of the anti-peeping pixels and the shared pixels; and
a second light-shielding layer disposed on a side of the first light-shielding layer away from the light-emitting pixel layer and is disposed in a layer different from the first light-shielding layer, wherein the second light-shielding layer includes at least one first anti-peeping strip and at least one second anti-peeping strip, and in the first direction, the first anti-peeping strip is disposed between the anti-peeping pixel and the shared pixel that are adjacent to each other, and the second anti-peeping strip is disposed between the first pixel column and the second pixel column in the anti-peeping pixel;
wherein a second edge of the second anti-peeping strip is close to the second sub-pixel of the anti-peeping pixel in the second direction; and in a planar top view of the display panel, the second edge of the second anti-peeping strip is superposed on the first electrode portion or exceeds another first electrode portion in the second direction.

Optionally, in some embodiments of the invention, in the planar top view of the display panel, the second edge of the second anti-peeping strip is disposed within the first light-shielding layer.

Optionally, in some embodiments of the invention, each of the shared pixels includes the first sub-pixel, the second sub-pixel, and the third sub-pixel with different light-emitting colors, the first sub-pixel and the second sub-pixel are arranged along the second direction to form the first pixel column, a plurality of third sub-pixels are arranged along the second direction to form the second pixel column, the first pixel column and the second pixel column are arranged alternatively along the first direction;
wherein the first anti-peeping strip includes a first light-shielding portion extending along the second direction, in the first direction, the first light-shielding portion is located at one side of the first sub-pixel and the second sub-pixel of the anti-peeping pixel away from the second anti-peeping strip, and is adjacent to the third sub-pixel of the shared pixel; and
wherein in the planar top view of the display panel, an end edge of the first light-shielding portion close to the second sub-pixel is superposed on the first electrode portion or exceeds the first electrode portion in the second direction.

Optionally, in some embodiments of the invention, the end edge of the first light-shielding portion close to the second sub-pixel is flush with the second edge of the second anti-peeping strip in the first direction.

Optionally, in some embodiments of the invention, in the second direction, a first edge of the second anti-peeping strip is close to the first sub-pixel of the anti-peeping pixel, the first edge of the second anti-peeping strip exceeds an edge of the first sub-pixel and an edge of the third sub-pixel of the anti-peeping pixel; and wherein a distance between one of the edge of the first sub-pixel and the edge of the third sub-pixel which is closest to the first electrode portion, and the first edge of the second anti-peeping strip is greater than or equal to a width of the first electrode portion.

Optionally, in some embodiments of the invention, two adjacent ones of at least two second anti-peeping strips are partially overlapped in the first direction.

Optionally, in some embodiments of the invention, each of the shared pixels includes the first sub-pixel and the second sub-pixel with different light-emitting colors, and the first sub-pixel and the second sub-pixel are alternately arranged along the second direction to form the first pixel column;
wherein in the second direction, a distance between the second sub-pixel of the shared pixel and the first sub-pixel of the anti-peeping pixel is L, the width of the first electrode portion is M, and a distance between the first edge at one end of the second anti-peeping strip close to the shared pixel and the second sub-pixel of the shared pixel is S; and
wherein S≥(L-M)/2.

Optionally, in some embodiments of the invention, the first edge of the second anti-peeping strip does not exceed an edge at a side of the first electrode portion close to the shared pixel in the second direction.

Optionally, in some embodiments of the invention, in the display panel at a top viewing angle, an end portion of the second anti-peeping strip having the first edge is overlapped with the first electrode portion.

Optionally, in some embodiments of the invention, the display panel is provided with a plurality of light-transmission opening regions, each of the light-transmission opening regions is located in an area of the second pixel column, and the light-transmission opening regions are configured to transmit ambient light and/or set light; wherein a portion of the second anti-peeping strip close to the light-transmission opening region is provided with a hollowed-out notch, and at least a part of the hollowed-out notch is located within the light-transmission opening region.

Optionally, in some embodiments of the invention, a portion of the second anti-peeping strip close to the light-transmission opening region is formed with a first oblique side, the first oblique side is connected with the first edge of the second anti-peeping strip, and the first oblique side is a sidewall of the hollowed-out notch.

Optionally, in some embodiments of the invention, a side of the first anti-peeping strip facing the third sub-pixel of the anti-peeping pixel is provided with a second oblique side; wherein in the first direction, the first oblique side and the second oblique side are aligned with each other; and in the planar top view of the display panel, an extension direction of the first oblique side and an extension direction of the second oblique side are disposed symmetrically with respect to a central axis of the third sub-pixel.

Optionally, in some embodiments of the invention, a portion of the second anti-peeping strip close to the light-transmission opening region is formed with a first side and a second side, an extension direction of the first side is intersected with an extension direction of the second side, the second side extends along the second direction, and the first side is located at an outer side of the light-transmission opening region in the second direction; and
wherein the second side is connected to the first edge of the second anti-peeping strip, and the first side and the second side are sidewalls of the hollowed-out notch.

Optionally, in some embodiments of the invention, a side of the second anti-peeping strip close to the first sub-pixel of the anti-peeping pixel is formed with a third oblique side, the third oblique side is connected to an end of the first edge away from the hollowed-out notch; wherein a side of the first anti-peeping strip close to the first sub-pixel of the anti-peeping pixel is formed with a fourth oblique side, and the third oblique side and the fourth oblique side are aligned with each other in the first direction; and in the planar top view of the display panel, an extension direction of the third oblique side and an extension direction of the fourth oblique side are disposed symmetrically with respect to a central axis of the third sub-pixel.

Optionally, in some embodiments of the invention, the second edge of the second anti-peeping strip is close to the second sub-pixel of the anti-peeping pixel in the second direction; and
in the planar top view of the display panel, the second edge of the second anti-peeping strip is superposed on another first electrode portion or exceeds another first electrode portion in the second direction.

Optionally, in some embodiments of the invention, each of the shared pixels includes the first sub-pixel, the second sub-pixel, and the third sub-pixel with different light-emitting colors, the first sub-pixel and the second sub-pixel are arranged along the second direction to form the first pixel column, a plurality of third sub-pixels are arranged along the second direction to form the second pixel column, the first pixel column and the second pixel column are arranged alternatively along the first direction;
wherein the first anti-peeping strip includes a first light-shielding portion extending along the second direction, in the first direction, the first light-shielding portion is located at one side of the first sub-pixel and the second sub-pixel of the anti-peeping pixel away from the second anti-peeping strip, and is adjacent to the third sub-pixel of the shared pixel; and
wherein in the planar top view of the display panel, an end edge of the first light-shielding portion close to the second sub-pixel is superposed on the first electrode portion or exceeds the first electrode portion in the second direction.

Optionally, in some embodiments of the invention, the first anti-peeping strip includes a joint portion and a second light-shielding portion extending along the second direction, and the joint portion is connected between the first light-shielding portion and the second light-shielding portion in the second direction; and
wherein in the first direction, the second light-shielding portion is adjacent to both the third sub-pixel of the anti-peeping pixel and the first sub-pixel and the second sub-pixel of the shared pixel, wherein a distance between the first light-shielding portion and the first sub-pixel of the anti-peeping pixel is less than a distance between the first light-shielding portion to the third sub-pixel of the shared pixel, and a distance between the second light-shielding portion and the third sub-pixel of the anti-peeping pixel is less than a distance between the second light-shielding portion and the first sub-pixel of the shared pixel.

Optionally, in some embodiments of the invention, the first light-shielding layer includes a plurality of bottom light-shielding strips, each of the bottom light-shielding strips extends along the second direction and is disposed between the first pixel column and the second pixel column, and the bottom light-shielding strip continuously passes through the shared pixels and the anti-peeping pixels; and
wherein in the planar top view of the display panel, the first light-shielding layer and the second light-shielding layer are arranged in an overlapped manner; wherein in the first direction, a distance between the bottom light-shielding strip and the first sub-pixel of the shared pixel is greater than a distance between the bottom light-shielding strip to the first sub-pixel of the anti-peeping pixel; a distance between the bottom light-shielding strip to the second sub-pixel of the shared pixel is greater than a distance between the bottom light-shielding strip and the second sub-pixel of the anti-peeping pixel; and a distance between the bottom light-shielding strip and the third sub-pixel of the shared pixel is greater than a distance between the bottom light-shielding strip and the third sub-pixel of the anti-peeping pixel.

Optionally, in some embodiments of the invention, in a direction of at least one specific oblique viewing angle, the second anti-peeping strip at least shields 65% of an area of one of the first sub-pixel and the second sub-pixel of the anti-peeping pixel, and the second anti-peeping strip fully shields another one of the first sub-pixel and the second sub-pixel of the anti-peeping pixel.

Optionally, in some embodiments of the invention, in the direction of the specific oblique viewing angle, the second anti-peeping strip at least shields 80% of the area of one of the first sub-pixel and the second sub-pixel of the anti-peeping pixel, and the second anti-peeping strip fully shields the other one of the first sub-pixel and the second sub-pixel of the anti-peeping pixel.

Optionally, in some embodiments of the invention, at least two specific oblique viewing angles are provided, an angle of one of the at least two specific oblique viewing angles ranges from +30 degrees to +60 degrees or ranges from +120 degrees to +150 degrees, and an angle of another one of the at least two specific oblique viewing angles ranges from -30 degrees to -60 degrees or ranges from -120 degrees to -150 degrees.

Optionally, in some embodiments of the invention, the at least two specific oblique viewing angles include a first specific oblique viewing angle and a second specific oblique viewing angle, an angle of the first specific oblique viewing angle is +45 degrees, and an angle of the second specific oblique viewing angle is -135 degrees.

According to a second aspect of the invention, a display device is provided, including the display panel according to any one of the embodiments described above.

In the display panel and display device of the embodiments of the invention, the first light-shielding layer is disposed on a light-emitting side of the light-emitting pixel layer and is disposed in a different layer from the light-emitting pixel layer; the second light-shielding layer is disposed at one side of the first light-shielding layer away from the light-emitting pixel layer. The second light-shielding layer includes a first anti-peeping strip and a second anti-peeping strip. In the first direction, the first anti-peeping strip is disposed between an anti-peeping pixel U1 and a shared pixel that are adjacent to each other, and the second anti-peeping strip is disposed between a first pixel column and a second pixel column in the anti-peeping pixel. In the second direction, a second edge of the second anti-peeping strip is close to the second sub-pixel of the anti-peeping pixel; in an orthographic projection of the display panel on a plane, in the second direction, the second edge of the second anti-peeping strip is superposed on the first electrode portion or exceeds one first electrode portion.

It can be understood that, in the embodiments of the invention, since the second edge of the second anti-peeping strip is superposed on one first electrode portion or exceeds one first electrode portion to elongate the second anti-peeping strip in the second direction, the area of the second anti-peeping strip covering the second sub-pixel is increased, thereby reducing the difference in light-emitting luminance between the first sub-pixel and the second sub-pixel at the specific viewing angle in the anti-peeping mode. Thus, the problem of color-conversion caused by relatively high luminance of the light emitted from the first sub-pixel and/or second sub-pixel at specific oblique viewing angles can be reduced.

Other features and advantages of the invention will be described in detail in the following detailed description.

### BRIEF DESCRIPTION OF THE DRAWINGS

In order to explain the embodiments of the invention more clearly, the accompanying drawings required in the description of the embodiments will be briefly introduced below. It will be apparent that the accompanying drawings in the following description are merely some of the embodiments of the invention, and other drawings may be obtained on the basis of these drawings by those skilled in the art without involving any inventive effort.

In order to fully understand the present application and beneficial effects thereof, the description will be given below in conjunction with the drawings, and the same reference numbers in the description below indicate the same parts in the drawings.
FIG. 1a is a schematic diagram of a structure of a display panel at a first viewing angle according to an exemplary comparative example;
FIG. 1b is a schematic diagram of a structure of a display panel at a second viewing angle according to an exemplary comparative example;
FIG. 2 is a schematic diagram of azimuth angles of viewing angles of a display panel according to some embodiments of the invention;
FIG. 3 is a schematic diagram of area of a sub-pixel of a display panel at a specific oblique angle being shielded according to the embodiments of the invention;
FIG. 4 is a schematic diagram of a cross-sectional structure of a display panel according to some embodiments of the invention;
FIG.5 is a schematic diagram of a planar top viewing structure of a display panel according to some embodiments of the invention;
FIG. 6 is a schematic diagram of structures of a light-emitting pixel layer and a touch electrode in FIG. 5;
FIG. 7 is a schematic diagram of structures of a light-emitting pixel layer, a touch electrode and a second light-shielding layer in FIG. 5;
FIG. 8 is a schematic diagram of structures of a light-emitting pixel layer, a touch electrode and a first light-shielding layer in FIG. 5;
FIG. 9 is a schematic diagram of another planar top viewing structure of a display panel according to some embodiments of the invention; and
FIG. 10 is a schematic diagram of a structure of a display device according to some embodiments of the invention.

### Description of reference numerals:

Bottom Black Matrix Layer-BM1; Top Black Matrix Layer-BM2; Anti-Peeping Pixel-U1; Shared Pixel-U2; Red Sub-Pixel-R; Green Sub-Pixel-G; Blue Sub-Pixel-B; black shielding body-01; Display Panel-100; Pixel Definition Layer-101; Light-Emitting Pixel Layer-102; Encapsulation Layer-103; Touch Structure Layer-104; First Light-Shielding Layer-105; Spacer Layer-106; Second Light-Shielding Layer-107; Pixel Opening-P1; First Touch Insulation Layer-04a; Second Touch Insulation Layer-04b; Touch Electrode-04c; First Organic Layer-06a; Second Organic Layer-06b; First Direction-F1; Second Direction-F2; First Sub-Pixel-G1; Second Sub-Pixel-R1; Third Sub-Pixel-B1; First Pixel Column-V1; Second Pixel Column-V2; First Anti-Peeping Strip-07a; Second Anti-Peeping Strip-07b; First Electrode Line-041; Second Electrode Line-042; Third Electrode Line-043; First Electrode Portion-411; Second Electrode Portion-412; First Edge-7b1; Second Edge-7b2; Light-Transmission Opening Region-K1; Hollowed-Out Notch-K2; First Oblique Side-X1; Second Oblique Side-X2; Third Oblique Side-X3; Fourth Oblique Side-X4; First Light-Shielding Portion-071; Second Light-Shielding Portion-072; Joint Portion-073; Bottom Light-Shielding Strip-051; First Side-Y1; Second Side-Y2; Display Device-1000.

### DETAILED DESCRIPTION

In the following, the embodiments of the invention will be clearly and completely described with reference to the accompanying drawings. It will be apparent that the described embodiments are only part, rather than all, of the embodiments of the invention. Based on the embodiments of the invention, all other embodiments obtained by those skilled in the art without involving any inventive effort shall still fall within the scope of the invention.

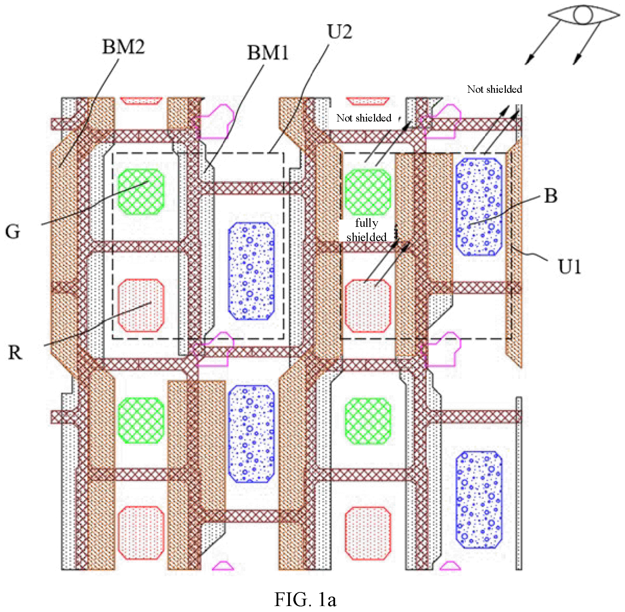

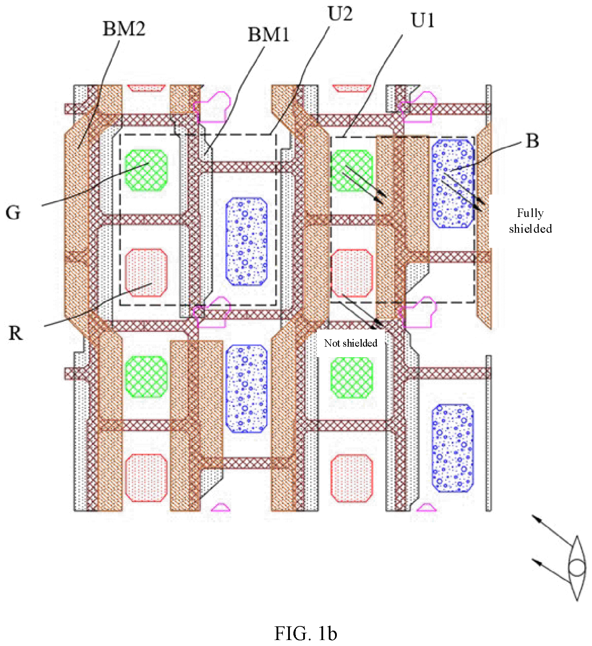

Referring to FIG. 1a and FIG. 1b, the display panel 100 includes a bottom black matrix layer BM1, a top black matrix layer BM2, an anti-peeping pixel U1 and a shared pixel U2. The anti-peeping pixel U1 and the shared pixel U2 both include red sub-pixel/green sub-pixel/blue sub-pixel (R/G/B). The bottom black matrix layer BM1 is disposed on the anti-peeping pixel U1 and the shared pixel U2, and the top black matrix layer BM2 is disposed on the bottom black matrix layer BM1, and is located at two sides of each of the anti-peeping pixel U1 and the shared pixel U2, so as to achieve one-way anti-peeping (anti-peeping in the horizontal direction as shown in the figures), and the sub-pixel is long strip-shaped.

When viewing at an oblique angle of +45 degrees (the first oblique viewing angle) in the anti-peeping mode, the blue sub-pixel B and green sub-pixel G in the anti-peeping pixel U1 are less affected by the top black matrix layer BM2, and 50%-60% of the area of the cyan sub-pixel is shielded, so that more light is emitted out; the red sub-pixel R is greatly affected by the top black matrix layer BM2, and a small amount of light is emitted out, so the displayed color tends to be cyan. When viewing at an oblique angle of -135 degrees (the second oblique viewing angle) in the anti-peeping mode, the red sub-pixel R in the anti-peeping pixel U1 is less affected by the top black matrix layer BM2, and 50%-60% of the area of the red sub-pixel is shielded, so that more light is emitted out; the blue sub-pixel B and the green sub-pixel G are greatly affected by the top black matrix layer BM2, and a small amount of light is emitted out, so the displayed color tends to be pink.

Based on this, in the embodiments of the invention, the top black matrix layer BM2 (the second anti-peeping strip 07b below) corresponding to the sub-pixel which originally has a large amount of light leakage at a specific viewing angle is elongated, so that the top black matrix layer BM2 can shield at least 65% of the area of the sub-pixel which originally has a large amount of light leakage at the specific viewing angle, so as to reduce the luminance of light emitted from the sub-pixel at the specific viewing angle, thereby reducing the problem of color conversion caused by the relatively high luminance of the light emitted from the sub-pixel at the specific viewing angle.

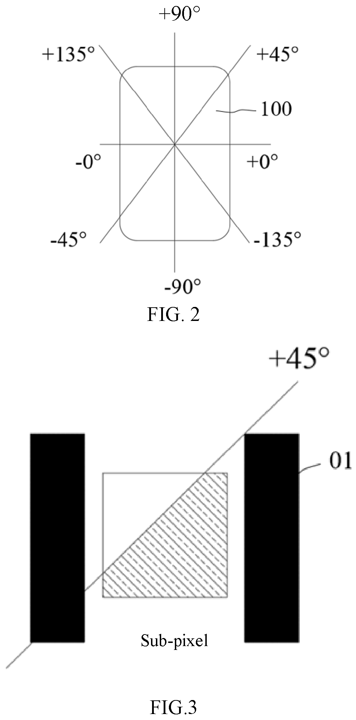

Optionally, referring to FIG. 2, FIG. 2 is a schematic diagram of azimuth angles of viewing angles based on a display surface of a display panel 100 according to the invention. A system of azimuth angles of the viewing angles is established with the center of the display surface as an origin. The direction along the 0-degree viewing angle and the direction along the 90-degree viewing angle are intersected perpendicularly at the origin. The region above the direction along the 0-degree viewing angle is a "+" angle region, the region below the direction along the 0-degree viewing angle is a "-" angle region, the direction exactly at the left side of the direction along the 0-degree viewing angle is -0 degrees, the direction exactly at the right side of the direction along the 0-degree viewing angle is +0 degrees, and the azimuth angle of the viewing angle is deflected clockwise.

Based on this, referring to FIG. 3, FIG. 3 is a schematic diagram showing an area of a sub-pixel being shielded. For example, as shown in the viewing angle of +45 degrees, an area of the sub-pixel shielded by the right side black shielding body 01 is an area of the sub-pixel covered by the black shielding body 01 at an angle of +45 degrees.

That is, an oblique line at +45 degrees is drawn along the maximum shielding point of the right side black shielding body 01 (the left diagonal point of the right side black shielding body 01), and the part below the oblique line is the part being shielded.

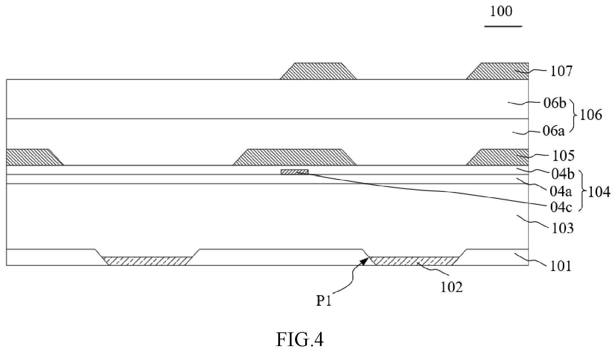

Optionally, in some embodiments of the invention, referring to FIG. 4, FIG. 4 is a schematic diagram of a cross-sectional structure of the display panel 100 according to some embodiments of the invention. It should be noted that the structure of the display panel 100 in the embodiments is not limited thereto.

The invention provides the display panel 100, which includes a circuit layer, a pixel definition layer 101, a light-emitting pixel layer 102, an encapsulation layer 103, a touch structure layer 104, a first light-shielding layer 105, a spacer layer 106 and a second light-shielding layer 107.

The pixel definition layer 101 is disposed on the circuit layer, the pixel definition layer 101 is provided with a plurality of pixel openings P1, and the light-emitting pixel layer 102 is disposed in the pixel openings P1. The encapsulation layer 103 covers the light-emitting pixel layer 102. The touch structure layer 104 is disposed on a side of the encapsulation layer 103 away from the pixel definition layer 101. The first light-shielding layer 105 is disposed on a side of the touch structure layer 104 away from the pixel definition layer 101. The spacer layer 106 covers the first light-shielding layer 105, and the second light-shielding layer 107 is disposed on a side of the spacer layer 106 away from the pixel definition layer 101.

Optionally, the circuit layer includes a pixel circuit, and the pixel circuit is configured to drive the light-emitting pixel layer 102 to emit light. The light-emitting pixel layer 102 includes an organic light-emitting layer. In some embodiments, the organic light-emitting layer includes a bottom electrode, a hole injection layer, a hole transport layer, an organic light-emitting material layer, an electron transport layer, an electron injection layer and a counter electrode that are stacked.

Optionally, the bottom electrode is an anode, and the counter electrode is a cathode.

The encapsulation layer 103 includes an inorganic encapsulation layer, an organic encapsulation layer and an inorganic encapsulation layer that are stacked.

The touch structure layer 104 includes a first touch insulation layer 04a, a second touch insulation layer 04b and a touch electrode 04c. The touch electrode 04c is disposed between the first touch insulation layer 04a and the second touch insulation layer 04b, but not limited thereto. In some embodiments, the touch electrode 04c is disposed at a side of the first touch insulation layer 04a and the second touch insulation layer 04b close to the encapsulation layer 103.

The spacer layer 106 may be organic planarization materials, and the spacer layer 106 may include a first organic layer 06a and a second organic layer 06b that are stacked. The spacer layer 106 is configured to elevate the second light-shielding layer 107, so as to improve the light-shielding effect of the second light-shielding layer 107.

Optionally, the first light-shielding layer 105 and the second light-shielding layer 107 may be made of an inorganic metal material, such as Cr, Mo or Mn; or of a metal oxide material, such as CrOₓ, MoOₓ or MnO₂; or of a mixed film layer formed by a metal and a metal oxide; or of an organic black resin material such as black polystyrene or black photoresist.

Optionally, the first light-shielding layer 105 and the second light-shielding layer 107 are made of a black light-absorbing material.

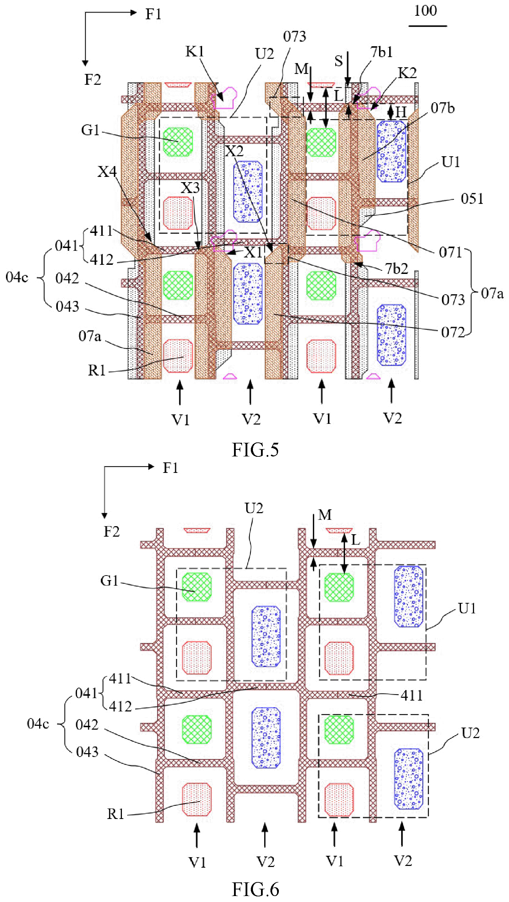

Referring to FIG. 5, FIG.5 is a schematic diagram of a planar top viewing structure of the display panel 100 according to some embodiments of the invention.

Optionally, the light-emitting pixel layer 102 includes anti-peeping pixels U1 and shared pixels U2. The anti-peeping pixels U1 and the shared pixels U2 are arranged alternately along the first direction F1, and the anti-peeping pixels U1 and the shared pixels U2 are arranged alternately along the second direction F2 intersected with the first direction F1.

Optionally, the light-emitting pixel layer 102 includes a plurality of sub-pixels. The plurality of sub-pixels include first sub-pixels G1, second sub-pixels R1 and third sub-pixels B1 with different light-emitting colors. Some of the first sub-pixels G1, the second sub-pixels R1 and the third sub-pixels B1 are configured as anti-peeping pixels U1, and another part of the first sub-pixels G1, the second sub-pixels R1 and the third sub-pixels B1 are configured as shared pixels U2.

Optionally, the first sub-pixel G1, the second sub-pixel R1 and the third sub-pixel B1 are all rectangles such as right-angled rectangles, chamfered rectangles or rounded-corner rectangles. For example, each of the first sub-pixel G1, the second sub-pixel R1 and the third sub-pixel B1 may be a rectangle or a square.

One of the first sub-pixel G1, the second sub-pixel R1 and the third sub-pixel B1 emits green light, another one emits red light, and the last one emits blue light. In the following, it is taken as an example that the first sub-pixel G1 emits green light, the second sub-pixel R1 emits red light, and the third sub-pixel B1 emits blue light for illustration.

That is, the anti-peeping pixel U1 and the shared pixel U2 both include the first sub-pixel G1, the second sub-pixel R1 and the third sub-pixel B1 with different light-emitting colors. The first sub-pixels G1 and the second sub-pixels R1 are arranged along the second direction F2 to form a first pixel column V1 . A plurality of third sub-pixels B1 are arranged along the second direction F2 to form a second pixel column V2. The first pixel column V1 and the second pixel column V2 are arranged along the first direction F1.

Optionally, in some embodiments of the invention, in the first direction F1, a plurality of first sub-pixels G1 are arranged to form a first pixel row, and a plurality of second sub-pixels R1 are arranged to form a second pixel row. That is, in the same pixel row, the first sub-pixel G1 and the second sub-pixel R1 are arranged in different rows.

The first light-shielding layer 105 is disposed on the light-emitting side of the light-emitting pixel layer 102 and is disposed in a different layer from the light-emitting pixel layer 102. The first light-shielding layer 105 is configured to shield part of emitted light of the anti-peeping pixel U1 and the shared pixel U2.

In the first direction F1, the first light-shielding layer 105 is disposed at least at two sides of the first pixel column V1 and at two sides of the second pixel column V2. For example, the first light-shielding layer 105 may surround all peripheries of each sub-pixel or only be arranged on two sides of each sub-pixel.

The second light-shielding layer 107 is disposed on a side of the first light-shielding layer 105 away from the light-emitting pixel layer 102 and is disposed in a different layer with the first light-shielding layer 105. The second light-shielding layer 107 includes a first anti-peeping strip 07a and a second anti-peeping strip 07b. In the first direction F1, the first anti-peeping strip 07a is disposed between the anti-peeping pixel U1 and the shared pixel U2 that are adjacent to each other. The second anti-peeping strip 07b is disposed between the first pixel column V1 and the second pixel column V2 in the anti-peeping pixel U1.

Optionally, the first anti-peeping strip 07a and the second anti-peeping strip 07b both extend along the second direction F2.

The direction of the specific oblique viewing angle is intersected with the first direction F1 and the second direction F2 respectively.

In the direction of a specific oblique viewing angle, the second anti-peeping strip 07b at least shields 65% of the area of one of the first sub-pixel G1 and the second sub-pixel R1 in the anti-peeping pixel U1, and the second anti-peeping strip 07b fully shields the other one of the first sub-pixel G1 and the second sub-pixel R1 in the anti-peeping pixel U1.

It should be noted that, in the anti-peeping mode, only the anti-peeping pixels U1 in the display panel 100 are lit up and the shared pixels U2 do not emit light. In the shared mode, the anti-peeping pixels U1 and the shared pixels U2 in the display panel 100 are lit up, or only the shared pixels U2 are lit up in the display panel 100.

The first direction F1 is equivalent to the direction of 0-degree viewing angle shown in FIG. 3. The second direction F2 is perpendicular to the first direction F1.

It can be understood that, through the embodiments of the invention, based on the fact that one of the first sub-pixel G1 and the second sub-pixel R1 is completely shielded by the second anti-peeping strip 07b in the direction of the specific viewing angle, at least 65% of the area of the other one of the first sub-pixel G1 and the second sub-pixel R1 is shielded by the second anti-peeping strip 07b in the direction of the specific viewing angle, so as to reduce the difference in light-emitting luminance between the first sub-pixel G1 and the second sub-pixel R1 in the direction of the specific viewing angle in the anti-peeping mode. Thus, the problem of color conversion caused by relatively high light-emitting luminance of the first sub-pixel G1 or the second sub-pixel R1 along the direction of the specific viewing angle may be reduced.

For example, the first sub-pixel G1 emits green light and the second sub-pixel R1 emits red light. The second anti-peeping strip 07b fully shields the second sub-pixel R1 at a specific oblique viewing angle. Therefore, at the specific oblique viewing angle, increasing the area of the first sub-pixel G1 shielded by the second anti-peeping strip 07b can reduce the problem that the displayed color tends to be cyan at a specific viewing angle in the anti-peeping mode.

In some embodiments, if the first sub-pixel G1 emits green light and the second sub-pixel R1 emits red light, the second anti-peeping strip 07b fully shields the first sub-pixel G1 at another specific oblique viewing angle. Therefore, in another specific oblique viewing angle, increasing the area of the second sub-pixel R1 shielded by the second anti-peeping strip 07b can reduce the problem that the displayed color tends to be pink at a specific viewing angle in the anti-peeping mode.

Optionally, in some embodiments of the invention, at a specific viewing angle, the second anti-peeping strip 07b at least shields 80% of the area of one of the first sub-pixel G1 and the second sub-pixel R1 in the anti-peeping pixel U1, and the second anti-peeping strip 07b fully shields the other one of the first sub-pixel G1 and the second sub-pixel R1 in the anti-peeping pixel U1.

It can be understood that, in the direction of a specific oblique viewing angle, the larger the area of the first sub-pixel G1 being shielded by the second anti-peeping strip 07b is, the better the effect of reducing the problem of displayed color tending to be cyan will be. When the area of the first sub-pixel G1 is shielded by 80% or more, the effect of reducing the problem of displayed color tending to be cyan is greatly improved and the influence of the displayed color tending to be cyan on human visual perception may be substantially avoided.

At another specific oblique viewing angle, the larger the area of the second sub-pixel R1 being shielded by the second anti-peeping strip 07b is, the better the effect of reducing the problem of displayed color tending to be pink will be. When the area of the second sub-pixel R1 is shielded by 80% or more, the effect of reducing the problem of the displayed color tending to be pink is greatly improved and the influence of the displayed color tending to be pink on human visual perception may be substantially avoided.

Optionally, in some embodiments of the invention, at least two specific oblique viewing angles are provided, at one specific viewing angle, the second anti-peeping strip 07b at least shields 65% or 80% of the area of the first sub-pixel G1 of the anti-peeping pixel U1, and the second anti-peeping strip 07b fully shields the second sub-pixel R1 in the anti-peeping pixel U1. At another specific viewing angle, the second anti-peeping strip 07b at least shields 65% or 80% of the area of the second sub-pixel R1 in the anti-peeping pixel U1, and the second anti-peeping strip 07b fully shields the first sub-pixel G1 in the anti-peeping pixel U1.

It can be understood that, at a specific oblique viewing angle, the larger the area of the first sub-pixel G1 being shielded by the second anti-peeping strip 07b is, the better the effect of reducing the problem of displayed color tending to be cyan will be. When the area of the first sub-pixel G1 is shielded by 65% or 80% and more, the effect of reducing the problem of displayed color tending to be cyan is greatly improved and the influence of the displayed color tending to be cyan on human visual perception may be substantially avoided. At another specific oblique viewing angle, the larger the area of the second sub-pixel R1 being shielded by the second anti-peeping strip 07b is, the better the effect of reducing the problem of displayed color tending to be pink will be. When the area of the second sub-pixel R1 is shielded by 65% or 80% and more, the effect of reducing the problem of displayed color tending to be pink is greatly improved and the influence of the displayed color tending to be pink on human visual perception may be substantially avoided.

Optionally, in some embodiments of the invention, at least two specific oblique viewing angles are provided. An angle of one specific oblique viewing angle ranges from +30 degrees to +60 degrees or ranges from +120 degrees to +150 degrees; an angle of another specific oblique viewing angle ranges from -30 degrees to -60 degrees or ranges from -120 degrees to -150 degrees.

For example, the plurality of specific oblique viewing angles may include +45 degrees, +135 degrees, -45 degrees and -135 degrees. Alternatively, the plurality of specific oblique viewing angles may include +30 degrees, +150 degrees, -30 degrees and -150 degrees. The angle orientation of the specific oblique viewing angle may be selected according to actual conditions.

Optionally, in some embodiments of the invention, the at least two specific oblique viewing angles include a first specific oblique viewing angle and a second specific oblique viewing angle. An angle of the first specific oblique viewing angle is +45 degrees, and an angle of the second specific oblique viewing angle is -135 degrees.

Optionally, referring to FIG. 5 and FIG. 6, FIG. 6 is a schematic diagram of structures of the light-emitting pixel layer 102 and the touch electrode 04c in FIG. 5. In some embodiments of the invention, the touch electrode 04c includes a first electrode line 041 and a second electrode line 042 extending along the first direction F1, and a third electrode line 043 extending along the second direction F2. The first electrode line 041 and the second electrode line 042 are both intersected and connected with the third electrode line 043 to form a grid structure.

In the second direction F2, the first electrode line 041 is disposed between the anti-peeping pixels U1 and the shared pixel U2 that are adjacent to each other. Part of the second electrode line 042 is disposed between the first sub-pixel G1 and the second sub-pixel R1 in the anti-peeping pixel U1, and part of the second electrode line 042 is disposed between the first sub-pixel G1 and the second sub-pixel R1 in the shared pixel U2.

The first electrode line 041 includes a first electrode portion 411 located in the area of the first pixel column V1 and a second electrode portion 412 located in the area of the second pixel column V2. In the second direction F2, the first electrode portion 411 is disposed between the first sub-pixel G1 and the second sub-pixel R1, and the second electrode portion 412 is disposed between two adjacent third sub-pixels B1.

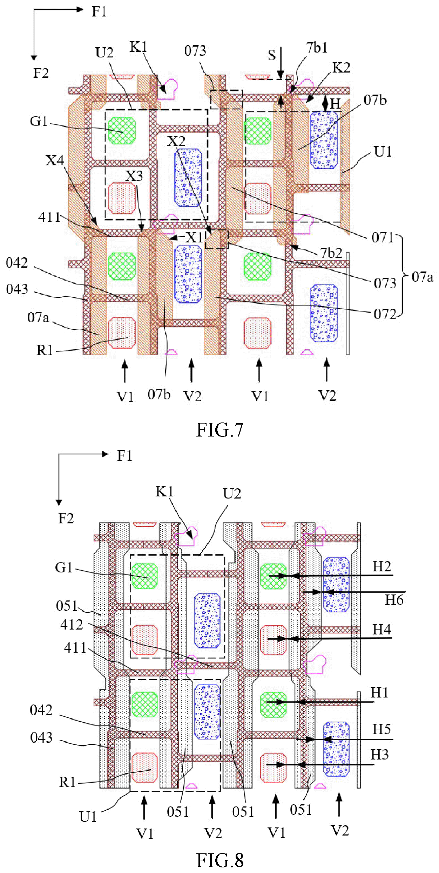

Optionally, in some embodiments of the invention, in combination with FIG. 5 and FIG. 7, FIG. 7 is a schematic diagram showing the structures of the light-emitting pixel layer 102, the touch electrode 04c and the second light-shielding layer 107 in FIG. 5.

In the second direction F2, a first edge 7b1 of the second anti-peeping strip 07b is close to the first sub-pixel G1 of the anti-peeping pixel U1, and the first edge 7b1 of the second anti-peeping strip 07b exceeds the edge of the first sub-pixel G1 and the edge of the third sub-pixel B1 in the anti-peeping pixel U1. The distance H between one of the edge of the first sub-pixel G1 and the edge of the third sub-pixel B1, which is closest to the first electrode portion 411, and the first edge 7b1 of the second anti-peeping strip 07b is greater than or equal to the width M of the first electrode portion 411.

It can be understood that, in the embodiment of the invention, the second anti-peeping strip 07b is extended towards the direction of the upper shared pixel U2 to cover more area of the first sub-pixel G1 at a specific viewing angle (for example +45 degrees), so that the problem of displayed color tending to be cyan can be reduced.

The extending position of the second anti-peeping strip 07b in the second direction F2 is at least increased by the width M of the first electrode portion 411 from the edge of the third sub-pixel B1, so that the second anti-peeping strip 07b can shield more of the first sub-pixel G1 in the direction of the specific oblique viewing angle of +45 degrees. Exemplarily, 65% or more of the area of the first sub-pixel G1 is shielded.

Optionally, in some embodiments of the invention, the shared pixel U2 also includes the first sub-pixel G1 and the second sub-pixel R1 with different light-emitting colors. The first sub-pixels G1 and the second sub-pixels R1 are arranged alternatively along the second direction F2 to form the first pixel column V1 .

In the second direction F2, a distance between the second sub-pixel R1 of the shared pixel U2 and the first sub-pixel G1 of the anti-peeping pixel U1 is L, the width of the first electrode portion 411 is M, and a distance from the first edge 7b1 at one end of the second anti-peeping strip 07b close to the shared pixel U2 to the second sub-pixel R1 of the shared pixel U2 is S.
$S \geq \left(L-M\right) / 2 .$

It can be understood that S≥(L-M)/2, so that the second anti-peeping strip 07b will not intrude into the set light-emitting range of the second sub-pixel R1 in the shared pixel U2 when the second anti-peeping strip is extended upwards, thereby preventing color deviation of the shared pixel U2 in the direction of a specific oblique viewing angle (e.g., -135 degrees) in the shared mode.

Optionally, in some embodiments of the invention, the first edge 7b1 of the second anti-peeping strip 07b does not exceed an edge of the first electrode portion 411 adjacent to the shared pixel U2.

It can be understood that, since the first electrode portion 411 is disposed at an intermediate position between the second sub-pixel R1 of the shared pixel U2 and the first sub-pixel G1 of the anti-peeping pixel U1, so that the distance from the first electrode portion 411 to the first sub-pixel G1 is equal to the distance from the first electrode portion 411 to the second sub-pixel R1.

Therefore, in the embodiments of the invention, the first edge 7b1 of the second anti-peeping strip 07b does not exceed the first electrode portion 411, so as not to intrude into the set light-emitting range of the second sub-pixel R1 in the shared pixel U2, thereby preventing color deviation of the shared pixel U2 in the direction of a specific oblique viewing angle (e.g., -135 degrees) in the shared mode.

Optionally, in some embodiments of the invention, in the display panel at a top viewing angle, an end portion of the second anti-peeping strip provided with the first edge is overlapped with the first electrode portion.

It can be understood that, in the embodiment of the invention, the end of the second anti-peeping strip 07b provided with the first edge 7b1 is overlapped with the first electrode portion 411, so as to satisfy a requirement that the second anti-peeping strip 07b does not intrude into the set light-emitting range of the second sub-pixel R1 of the shared pixel U2 while shielding the first sub-pixel G1 of the anti-peeping pixel U1 more effectively, and thus, reducing the problem of color conversion in the anti-peeping mode and preventing the problem of color deviation in the shared mode.

Optionally, in some embodiments of the invention, in the second direction F2, the first edge 7b1 of the second anti-peeping strip 07b is flush and overlapped with the edge at a side of the first electrode portion 411 close to the shared pixel U2.

It can be understood that, in the embodiment of the invention, the first edge 7b1 of the second anti-peeping strip 07b is coincident with the edge at the side of the first electrode portion 411 close to the shared pixel U2, so as to satisfy the requirement that the second anti-peeping strip 07b does not intrude into the set light-emitting range of the second sub-pixel R1 of the shared pixel U2 while maximizing the shielding of the first sub-pixel G1 of the anti-peeping pixel U1, and thus, reducing the problem of color conversion in the anti-peeping mode to the greatest extent and preventing the problem of color deviation in the shared mode.

Optionally, in some embodiments of the invention, two adjacent second anti-peeping strips 07b are partially overlapped with each other in the first direction F1.

It can be understood that, based on the fact that two adjacent second anti-peeping strips 07b in the first direction F1 are partially overlapped, at least one of the two adjacent second anti-peeping strips 07b is elongated to improve the shielding effect of sub-pixel adjacent thereto, thereby reducing the risk of color deviation appearing at specific oblique viewing angle.

For example, the second anti-peeping strips 07b may be both elongated upwardly, or the second anti-peeping strips 07b may be both elongated downwardly, or the second anti-peeping strips 07b may be both elongated upwardly and downwardly simultaneously.

Optionally, in some embodiments of the invention, referring to FIG. 6, the display panel 100 is provided with a plurality of Light-Transmission Opening regions K1, and the Light-Transmission Opening regions K1 are located in the region of the second pixel column V2. The Light-Transmission Opening region K1 is configured to transmit ambient light or set light.

It can be understood that since the second pixel column V2 is only provided with the third sub-pixel B1, a larger space is provided between two adjacent third sub-pixels B1 in the second direction F2. Therefore, the Light-Transmission Opening region K1 is disposed in the region of the second pixel column V2, ambient light or set light may be transmitted better.

Exemplarily, the Light-Transmission Opening region K1 is configured to transmit infrared light so as to facilitate biometric identification.

A portion of the second anti-peeping strip 07b close to the Light-Transmission Opening region K1 is provided with a hollowed-out notch K2, and at least part of the hollowed-out notch K2 is located in the Light-Transmission Opening region K1.

It can be understood that the hollowed-out notch K2 is formed on the second anti-peeping strip 07b, so as to reduce the area of the Light-Transmission Opening region K1 covered by the second anti-peeping strip 07b, thereby reducing the risk of deterioration in light transmittance of the Light-Transmission Opening region K1.

Optionally, in some embodiments of the invention, a portion of the second anti-peeping strip 07b close to the light-transmission opening region K1 forms a first oblique side X1, and the first oblique side X1 is connected to the first edge 7b1 of the second anti-peeping strip 07b. The first oblique side X1 is the sidewall of the hollowed-out notch K2.

It is understood that in the embodiment of the invention, since the second anti-peeping strip 07b will shield the light-transmission opening region K1 when being extended upwardly, a chamfering process is performed on the end of the second anti-peeping strip 07b to form the first oblique side X1. The chamfering process reduces an area of the light-transmission opening region K1 shielded by the second anti-peeping strip 07b, thereby reducing the risk of deterioration of light transmittance of the light-transmission opening region K1.

Optionally, in some embodiments of the invention, a second oblique side X2 is provided at one side of the first anti-peeping strip 07a facing the third sub-pixel B1 of the anti-peeping pixel U1. In the first direction F1, the first oblique side X1 and the second oblique side X2 are disposed in alignment with each other. In the planar top view of the display panel 100, the extension direction of the first oblique side X1 and the extension direction of the second oblique side X2 are symmetrical with respect to a central axis of the third sub-pixel B1.

It can be understood that, since the first oblique side X1 and the second oblique side X2 are located at two sides of the third sub-pixel B1 in a diagonal direction thereof, the extension directions of the first oblique side X1 and the second oblique side X2 are symmetrically arranged with respect to the central axis of the third sub-pixel B1 so as to improve symmetry of light emission of the third sub-pixel B1 and improve the display uniformity.

Optionally, in some embodiments of the invention, a third oblique side X3 is formed at one side of the second anti-peeping strip 07b close to the first sub-pixel G1 of the anti-peeping pixel U1. The third oblique side X3 is connected to an end of the first edge 7b1 away from the hollowed-out notch K2. A fourth oblique side X4 is formed at a side of the first anti-peeping strip 07a close to the first sub-pixel G1 of the anti-peeping pixel U1. In the first direction F1, the third oblique side X3 and the fourth oblique side X4 are disposed in alignment with each other. In the planar top view of the display panel 100, the extension direction of the third oblique side X3 and the extension direction of the fourth oblique side X4 are symmetrical with respect to the central axis of the third sub-pixel B1.

It can be understood that, since the first anti-peeping strip 07a at the left side of the first sub-pixel G1 in the anti-peeping pixel U1 is provided with the fourth oblique side X4, the side of the second anti-peeping strip 07b close to the right side of the first sub-pixel G1 is formed with the third oblique side X3, and the extension direction of the third oblique side X3 and the extension direction of the fourth oblique side X4 are arranged symmetrically with respect to the central axis of the third sub-pixel B1, so as to improve symmetry of light emission of the first sub-pixel G1 in the anti-peeping pixel U1, thereby improving display uniformity.

Optionally, in some embodiments of the invention, in the second direction F2, a second edge 7b2 of the second anti-peeping strip 07b is close to the second sub-pixel R1 of the anti-peeping pixel U1.

In the planar top view of the display panel 100, in the second direction F2, the second edge 7b2 of the second anti-peeping strip 07b is superposed on another first electrode portion 411 or exceeds another first electrode portion 411.

Exemplarily, the second edge 7b2 of the second anti-peeping strip 07b is superposed on the first electrode portion 411 between the first sub-pixel G1 of the shared pixel U2 and the second sub-pixel R1 of the anti-peeping pixel U1 to prevent the second anti-peeping strip 07b from entering into the set light-emitting range of the second sub-pixel R1, thereby reducing the risk of displayed color tending to be pink in the shared mode. Alternatively, the second edge 7b2 of the second anti-peeping strip 07b extends beyond the first electrode portion 411 between the first sub-pixel G1 of the shared pixel U2 and the second sub-pixel R1 of the anti-peeping pixel U1 to block more area of the second sub-pixels R1, so as to further optimize and reduce the problem of displayed color tending to be pink at the viewing angle of -135 degrees in the anti-peeping mode.

It may be understood that, in the embodiment of the invention, the second anti-peeping strip 07b is stretched towards a direction of the shared pixel U2 below along the second direction F2, so that the area of the second sub-pixel R1 shielded by the second anti-peeping strip 07b at a specific oblique viewing angle (for example, -135 degrees) is increased to further reduce the problem of displayed color tending to be pink at the viewing angle of -135 degrees in the anti-peeping mode.

Optionally, in some embodiments of the invention, in the planar top view of the display panel 100, the second edge 7b2 of the second anti-peeping strip 07b is disposed within the first light-shielding layer 105 to reduce the risk that the second anti-peeping strip 07b intrudes into the light-emitting range of the shared pixel U2.

In some embodiments of the invention, the first anti-peeping strip 07a includes a first light-shielding portion 071 extending along the second direction F2. In the first direction F1, the first light-shielding portion 071 is located at a side of the first sub-pixel G1 and the second sub-pixel R1 of the anti-peeping pixel U1 away from the second anti-peeping strip 07b, and is adjacent to the third sub-pixel B1 of the shared pixel U2.

Optionally, in some embodiments of the invention, the first anti-peeping strip 07a includes a second light-shielding portion 072 extending along the second direction F2 and a joint portion 073. In the second direction F2, the joint portion 073 is connected between the first light-shielding portion 071 and the second light-shielding portion 072.

In the first direction F1, the second light-shielding portion 072 is adjacent to both the third sub-pixel B1 of the anti-peeping pixel U1 and the first sub-pixel G1 and the second sub-pixel R1 of the shared pixel U2. The distance between the first light-shielding portion 071 and the first sub-pixel G1 of the anti-peeping pixel U1 is smaller than the distance between the first light-shielding portion 071 and the third sub-pixel B1 of the shared pixel U2, and the distance between the second light-shielding portion 072 and the third sub-pixel B1 of the anti-peeping pixel U1 is smaller than the distance between the second light-shielding portion 072 and the first sub-pixel G1 of the shared pixel U2.

That is, the first light-shielding portion 071 is closer to the first sub-pixel G1 and the second sub-pixel R1 of the anti-peeping pixel U1 in an odd row; and the second light-shielding portion 072 is closer to the third sub-pixel B1 of the anti-peeping pixel U1 in an even row.

In some embodiments of the invention, in the planar top view of the display panel 100, along the second direction F2, the end edge of the first light-shielding portion 071 close to the second sub-pixel R1 is superposed on the first electrode portion 411 or exceeds the first electrode portion 411.

It can be understood that, in the embodiments of the invention, since the first light-shielding portion 071 is closer to the second sub-pixel R1 of the anti-peeping pixel U1, first light-shielding portion 071 of the first anti-peeping strip 07a is stretched towards a direction of the shared pixel U2 below along the second direction F2, so that the area of the second sub-pixel R1 shielded by the first light-shielding portion 071 at a specific oblique viewing angle (for example, -45 degrees) is increased to further reduce the problem of displayed color tending to be pink at the viewing angle of -45 degrees in the anti-peeping mode.

Exemplarily, in the second direction F2, the end edge of the first light-shielding portion 071 close to the second sub-pixel R1 is superposed on the first electrode portion 411, so as to prevent the first light-shielding portion 071 from intruding into the set light-emitting range of the second sub-pixel R1, thereby reducing the risk of the displayed color tending to be pink in the shared mode. Alternatively, in the second direction F2, the end edge of the first light-shielding portion 071 close to the second sub-pixel R1 exceeds the first electrode portion 411 to shield more area of the second sub-pixels R1, so as to further optimize and reduce the problem of displayed color tending to be pink at the viewing angle of -45 degrees in the anti-peeping mode.

Optionally, in some embodiments of the invention, in the first direction F1, the end edge of the first light-shielding portion 071 close to the second sub-pixel R1 is flush with the second edge 7b2 of the second anti-peeping strip 07b, so as to improve the symmetry of light emission of the second sub-pixel R1 and the first sub-pixel G1 of the shared pixel U2.

Optionally, in some embodiments of the invention, referring to FIG. 8, FIG. 8 is a schematic diagram of structures of the light-emitting pixel layer 102, the touch electrode 04c and the first light-shielding layer 105 shown in FIG. 5.

The first light-shielding layer 105 includes a plurality of bottom light-shielding strips 051. The bottom light-shielding strip 051 extends along the second direction F2 and is disposed between the first pixel column V1 and the second pixel column V2. The bottom light-shielding strip 051 continuously passes through a plurality of shared pixels U2 and the anti-peeping pixels U1.

In the planar top view of the display panel 100, the first light-shielding layer 105 and the second light-shielding layer 107 are arranged in an overlapped manner. In the first direction F1, the distance H1 between the bottom light-shielding strip 051 and the first sub-pixel G1 of the shared pixel U2 is greater than the distance H2 between the bottom light-shielding strip 051 and the first sub-pixel G1 of the anti-peeping pixel U1. The distance H3 between the bottom light-shielding strip 051 to the second sub-pixel R1 of the shared pixel U2 is greater than the distance H4 between the bottom light-shielding strip 051 to the second sub-pixel R1 of the anti-peeping pixel U1. The distance H5 between the bottom light-shielding strip 051 to the third sub-pixel B1 of the shared pixel U2 is greater than the distance H6 between the bottom light-shielding strip 051 to the third sub-pixel B1 of the anti-peeping pixel U1.

It can be understood that the first light-shielding layer 105 and the second light-shielding layer 107 are arranged in an overlapped manner so as to save layout space. In addition, the distance between the bottom light-shielding strip 051 to the sub-pixels of the shared pixel U2 is greater than the distance between the bottom light-shielding strip to the sub-pixels of the anti-peeping pixel U1, so as to achieve large-view-angle light emission of the sub-pixels (R1/G1/B1) of the shared pixel U2, and achieve small-view-angle light emission of the sub-pixels (R1/G1/B1) of the anti-peeping pixel U1.

Optionally, in some embodiments of the invention, the edge of each of the first anti-peeping strip 07a and the second anti-peeping strip 07b close to the anti-peeping pixel is aligned with the edge of the bottom light-shielding strip 051.

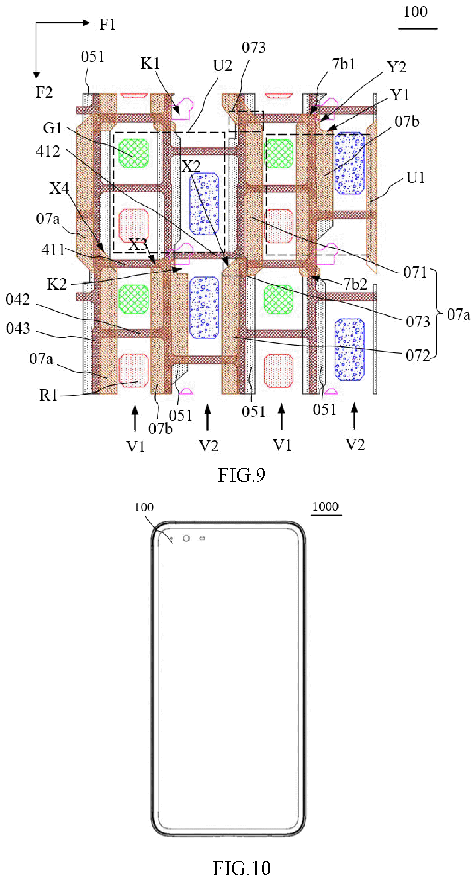

Referring to FIG. 9, FIG. 9 is a schematic diagram of another planar top viewing structure of the display panel 100 according to some embodiments of the invention. It should be noted that, different embodiments from the above embodiments will be described in FIG. 9 to avoid redundant description.

In FIG. 9, in some embodiments of the invention, a part of the second anti-peeping strip 07b close to the light-transmission opening region K1 is formed with a first side Y1 and a second side Y2. The extension direction of the first side Y1 is intersected with the extension direction of the second side Y2, and the second side Y2 extends along the second direction F2. In the second direction F2, the first side Y1 is located outside of the light-transmission opening region K1.

The second side Y2 is connected to the first edge 7b1 of the second anti-peeping strip 07b. The first side Y1 and the second side Y2 are sidewalls of the hollowed-out notch K2.

It can be understood that, in the embodiments of the invention, the irregular chamfering process is performed on a part of the second anti-peeping strip 07b close to the light-transmission opening region K1 so as to form the hollowed-out notch K2 with a larger area, thereby further reducing an area of the light-transmission opening region K1 shielded by the second anti-peeping strip 07b.

Optionally, the extension directions of the first side Y1 and the second side Y2 are perpendicular to each other.

Optionally, in some embodiments, the first side Y1 and the second side Y2 are connected by the chamfer.

Optionally, a part of the bottom light-shielding strip 051 close to the light-transmission opening region K1 is provided with another hollowed-out notch K2, so as to reduce an area of the light-transmission opening region K1 shielded by the bottom light-shielding strip 051.

Referring to FIG. 10, FIG. 10 is a schematic diagram of a structure of a display device 1000 according to some embodiments of the invention. According to a second aspect of the invention, a display device 1000 is provided, which includes the display panel 100 in any one of the embodiments described above.

It should be noted that the structure of the display panel 100 of the display device 1000 provided by the embodiments of the invention is the same as the structure of the display panel 100 provided by the above embodiments of the invention, and specific reference can be made to relevant descriptions in FIG. 2 to FIG. 9, which are not described herein again.

The display device 1000 may be at least one of a smartphone, a tablet, a mobile phone, a video phone, an electronic book reader, a desktop computer, a laptop, a netbook, a workstation, a server, a personal digital assistant, a portable media player, a MP3 player, a television, a mobile medical machine, a camera, a game console, a digital camera, a vehicle navigator, a vehicle display, an electronic billboard, an ATM, or a wearable device, a VR device, a AR device.

In the display device 1000 of the embodiments of the invention, the first light-shielding layer 105 is disposed on a light-emitting side of the light-emitting pixel layer 102 and is disposed in a different layer from the light-emitting pixel layer 102; the second light-shielding layer 107 is disposed at one side of the first light-shielding layer 105 away from the light-emitting pixel layer 102. The second light-shielding layer 107 includes a first anti-peeping strip 07a and a second anti-peeping striping 07b. In the first direction F1, the first anti-peeping strip 07a is disposed between an anti-peeping pixel U1 and a shared pixel U2 that are adjacent to each other, and the second anti-peeping strip 07b is disposed between a first pixel column V1 and a second pixel column V2 in the anti-peeping pixel U1.

In the direction of a specific oblique viewing angle, the second anti-peeping strip 07b at least shields 65% of the area of one of the first sub-pixel G1 and the second sub-pixel R1 in the anti-peeping pixel U1, and the second anti-peeping strip 07b fully shields the other one of the first sub-pixel G1 and the second sub-pixel R1 in the anti-peeping pixel U1.

It can be understood that, through the embodiments of the invention, based on the fact that one of the first sub-pixel G1 and the second sub-pixel R1 is completely shielded by the second anti-peeping strip 07b in the direction of the specific viewing angle, at least 65% of the area of the other one of the first sub-pixel G1 and the second sub-pixel R1 is shielded by the second anti-peeping strip 07b in the direction of the specific viewing angle, so as to reduce the difference in light-emitting luminance between the first sub-pixel G1 and the second sub-pixel R1 in the direction of the specific viewing angle in the anti-peeping mode. Thus, the problem of color conversion caused by relatively high light-emitting luminance of the first sub-pixel G1 or the second sub-pixel R1 along the direction of the specific viewing angle may be reduced.

In the description of the invention, the terms "first" and "second" are used solely for descriptive purposes and should not be understood as indicating or implying relative importance or the number of indicated technical features. Thus, features defined with "first" and "second" may explicitly or implicitly include one or more of the feature. In the description of the invention, "a plurality of" means two or more, unless otherwise specified.

In the foregoing embodiments, the descriptions of each embodiment have their own emphasis, and for parts not described in detail in a certain embodiment, reference may be made to relevant descriptions of other embodiments.

The embodiments, implementations and related technical features of the invention can be combined and replaced with each other without conflict.

What described above are only preferred embodiments of the invention and are not intended to limit the invention in any form. Any modification, equivalent change or embellishment to the above embodiments based on the technical concepts of the invention without departing from the content of the technical concepts of the invention shall still fall within the scope of the invention.

## Claims

1. A display panel (100), comprising:
a light-emitting pixel layer (102) comprising a plurality of anti-peeping pixels (U1) and a plurality of shared pixels (U2), wherein each of the anti-peeping pixels (U1) comprises a first sub-pixel (G1), a second sub-pixel (R1), and a third sub-pixel (B1) with different light-emitting colors, the first sub-pixel (G1) and the second sub-pixel (R1) are arranged along a second direction (F2) to form a first pixel column (V1), a plurality of third sub-pixels (B1) are arranged along the second direction (F2) to form a second pixel column (V2), and the first pixel column (V1) and the second pixel column (V2) are arranged along a first direction (F1);
a touch electrode (04c) disposed on a light-emitting side of the light-emitting pixel layer (102) and is disposed in a layer different from the light-emitting pixel layer (102), wherein the touch electrode (04c) comprises a first electrode line (041) extending along the first direction (F1); in the second direction (F2), the first electrode line (041) is disposed between one of the anti-peeping pixels (U1) and one of the shared pixels (U2) that are adjacent to each other, and the first electrode line (041) comprises a first electrode portion (411) located in a region of the first pixel column (V1);
a first light-shielding layer (105) disposed on a side of the touch electrode (04c) away from the light-emitting pixel layer (102) and is disposed in a layer different from the touch electrode (04c), and the first light-shielding layer (105) is configured to shield part of emitted light of the anti-peeping pixels (U1) and the shared pixels (U2); and
a second light-shielding layer (107) disposed on a side of the first light-shielding layer (105) away from the light-emitting pixel layer (102) and is disposed in a layer different from the first light-shielding layer (105), wherein the second light-shielding layer (107) comprises at least one first anti-peeping strip (07a) and at least one second anti-peeping strip (07b), and in the first direction (F1), the first anti-peeping strip (07a) is disposed between the anti-peeping pixel (U1) and the shared pixel (U2) that are adjacent to each other, and the second anti-peeping strip (07b) is disposed between the first pixel column (V1) and the second pixel column (V2) in the anti-peeping pixel (U1);
wherein a second edge (7b2) of the second anti-peeping strip (07b) is close to the second sub-pixel (R1) of the anti-peeping pixel (U1) in the second direction (F2); and in a planar top view of the display panel (100), the second edge (7b2) of the second anti-peeping strip (07b) is superposed on the first electrode portion (411) or exceeds the first electrode portion (411) in the second direction (F2).

2. The display panel (100) according to claim 1, wherein in the planar top view of the display panel (100), the second edge (7b2) of the second anti-peeping strip (07b) is disposed within the first light-shielding layer (105).

3. The display panel (100) according to claim 1, wherein each of the shared pixels (U2) comprises the first sub-pixel (G1), the second sub-pixel (R1), and the third sub-pixel (B1) with different light-emitting colors, the first sub-pixel (G1) and the second sub-pixel (R1) are arranged along the second direction (F2) to form the first pixel column (V1), a plurality of third sub-pixels (B1) are arranged along the second direction (F2) to form the second pixel column (V2), the first pixel column (V1) and the second pixel column (V2) are arranged alternatively along the first direction (F1);
wherein the first anti-peeping strip (07a) comprises a first light-shielding portion extending along the second direction (F2), in the first direction (F1), the first light-shielding portion is located at one side of the first sub-pixel (G1) and the second sub-pixel (R1) of the anti-peeping pixel (U1) away from the second anti-peeping strip (07b), and is adjacent to the third sub-pixel (B1) of the shared pixel (U2); and
wherein in the planar top view of the display panel (100), an end edge of the first light-shielding portion close to the second sub-pixel (R1) is superposed on the first electrode portion (411) or exceeds the first electrode portion (411) in the second direction (F2).

4. The display panel (100) according to claim 3, wherein the end edge of the first light-shielding portion close to the second sub-pixel (R1) is flush with the second edge (7b2) of the second anti-peeping strip (07b) in the first direction (F1).

5. The display panel (100) according to claim 1, wherein in the second direction (F2), a first edge (7b1) of the second anti-peeping strip (07b) is close to the first sub-pixel (G1) of the anti-peeping pixel (U1), the first edge (7b1) of the second anti-peeping strip (07b) exceeds an edge of the first sub-pixel (G1) and an edge of the third sub-pixel (B1) of the anti-peeping pixel (U1); and wherein a distance between one of the edge of the first sub-pixel (G1) and the edge of the third sub-pixel (B1) which is closest to the first electrode portion (411), and the first edge (7b1) of the second anti-peeping strip (07b) is greater than or equal to a width of the first electrode portion (411).

6. The display panel (100) according to claim 5, wherein two adjacent ones of at least two second anti-peeping strips (07b) are partially overlapped in the first direction (F1); or
wherein each of the shared pixels (U2) comprises the first sub-pixel (G1) and the second sub-pixel (R1) with different light-emitting colors, and the first sub-pixel (G1) and the second sub-pixel (R1) are alternately arranged along the second direction (F2) to form the first pixel column (V1);
wherein in the second direction (F2), a distance between the second sub-pixel (R1) of the shared pixel (U2) and the first sub-pixel (G1) of the anti-peeping pixel (U1) is L, the width of the first electrode portion (411) is M, and a distance between the first edge (7b1) at one end of the second anti-peeping strip (07b) close to the shared pixel (U2) and the second sub-pixel (R1) of the shared pixel (U2) is S; and
wherein S≥(L-M)/2.

7. The display panel (100) according to claim 5, wherein the first edge (7b1) of the second anti-peeping strip (07b) does not exceed an edge at a side of the first electrode portion (411) close to the shared pixel (U2) in the second direction (F2);
preferably, wherein in the display panel (100) at a top viewing angle, an end portion of the second anti-peeping strip (07b) having the first edge (7b1) is overlapped with the first electrode portion (411).

8. The display panel (100) according to claim 7, wherein the display panel (100) is provided with a plurality of light-transmission opening regions (K1), each of the light-transmission opening regions (K1) is located in an area of the second pixel column (V2), and the light-transmission opening regions (K1) are configured to transmit ambient light and/or set light; wherein a portion of the second anti-peeping strip (07b) close to the light-transmission opening region (K1) is provided with a hollowed-out notch (K2), and at least a part of the hollowed-out notch (K2) is located within the light-transmission opening region (K1).

9. The display panel (100) according to claim 8, wherein a portion of the second anti-peeping strip (07b) close to the light-transmission opening region (K1) is formed with a first oblique side (X1), the first oblique side (X1) is connected with the first edge (7b1) of the second anti-peeping strip (07b), and the first oblique side (X1) is a sidewall of the hollowed-out notch (K2).

10. The display panel (100) according to claim 9, wherein a side of the first anti-peeping strip (07a) facing the third sub-pixel (B1) of the anti-peeping pixel (U1) is provided with a second oblique side (X2); wherein in the first direction (F1), the first oblique side (X1) and the second oblique side (X2) are aligned with each other; and in the planar top view of the display panel (100), an extension direction of the first oblique side (X1) and an extension direction of the second oblique side (X2) are disposed symmetrically with respect to a central axis of the third sub-pixel (B1).

11. The display panel (100) according to claim 8, wherein a portion of the second anti-peeping strip (07b) close to the light-transmission opening region (K1) is formed with a first side (Y1) and a second side (Y2), an extension direction of the first side (Y1) is intersected with an extension direction of the second side (Y2), the second side (Y2) extends along the second direction (F2), and the first side (Y1) is located at an outer side of the light-transmission opening region (K1) in the second direction (F2); and
wherein the second side (Y2) is connected to the first edge (7b1) of the second anti-peeping strip (07b), and the first side (Y1) and the second side (Y2) are sidewalls of the hollowed-out notch (K2).

12. The display panel (100) according to any one of claims 9 to 11, wherein a side of the second anti-peeping strip (07b) close to the first sub-pixel (G1) of the anti-peeping pixel (U1) is formed with a third oblique side (X3), the third oblique side (X3) is connected to an end of the first edge (7b1) away from the hollowed-out notch (K2); wherein a side of the first anti-peeping strip (07a) close to the first sub-pixel (G1) of the anti-peeping pixel (U1) is formed with a fourth oblique side (X4), and the third oblique side (X3) and the fourth oblique side (X4) are aligned with each other in the first direction (F1); and in the planar top view of the display panel (100), an extension direction of the third oblique side (X3) and an extension direction of the fourth oblique side (X4) are disposed symmetrically with respect to a central axis of the third sub-pixel (B1).

13. The display panel (100) according to claim 3, wherein the first anti-peeping strip (07a) comprises a joint portion (073) and a second light-shielding portion (072) extending along the second direction (F2), and the joint portion (073) is connected between the first light-shielding portion and the second light-shielding portion (072) in the second direction (F2); and
wherein in the first direction (F1), the second light-shielding portion (072) is adjacent to both the third sub-pixel (B1) of the anti-peeping pixel (U1) and the first sub-pixel (G1) and the second sub-pixel (R1) of the shared pixel (U2), wherein a distance between the first light-shielding portion and the first sub-pixel (G1) of the anti-peeping pixel (U1) is less than a distance between the first light-shielding portion to the third sub-pixel (B1) of the shared pixel (U2), and a distance between the second light-shielding portion (072) and the third sub-pixel (B1) of the anti-peeping pixel (U1) is less than a distance between the second light-shielding portion (072) and the first sub-pixel (G1) of the shared pixel (U2);
preferably, wherein the first light-shielding layer (105) comprises a plurality of bottom light-shielding strips (051), each of the bottom light-shielding strips (051) extends along the second direction (F2) and is disposed between the first pixel column (V1) and the second pixel column (V2), and the bottom light-shielding strip (051) continuously passes through the shared pixels (U2) and the anti-peeping pixels (U1); and
wherein in the planar top view of the display panel (100), the first light-shielding layer (105) and the second light-shielding layer (107) are arranged in an overlapped manner; wherein in the first direction (F1), a distance between the bottom light-shielding strip (051) and the first sub-pixel (G1) of the shared pixel (U2) is greater than a distance between the bottom light-shielding strip (051) to the first sub-pixel (G1) of the anti-peeping pixel (U1); a distance between the bottom light-shielding strip (051) to the second sub-pixel (R1) of the shared pixel (U2) is greater than a distance between the bottom light-shielding strip (051) and the second sub-pixel (R1) of the anti-peeping pixel (U1); and a distance between the bottom light-shielding strip (051) and the third sub-pixel (B1) of the shared pixel (U2) is greater than a distance between the bottom light-shielding strip (051) and the third sub-pixel (B1) of the anti-peeping pixel (U1).

14. The display panel (100) according to any one of claims 1 to 11, wherein in a direction of at least one specific oblique viewing angle, the second anti-peeping strip (07b) at least shields 65% of an area of one of the first sub-pixel (G1) and the second sub-pixel (R1) of the anti-peeping pixel (U1), and the second anti-peeping strip (07b) fully shields another one of the first sub-pixel (G1) and the second sub-pixel (R1) of the anti-peeping pixel (U1);
preferably, wherein in the direction of the specific oblique viewing angle, the second anti-peeping strip (07b) at least shields 80% of the area of one of the first sub-pixel (G1) and the second sub-pixel (R1) of the anti-peeping pixel (U1), and the second anti-peeping strip (07b) fully shields the other one of the first sub-pixel (G1) and the second sub-pixel (R1) of the anti-peeping pixel (U1);
preferably, wherein at least two specific oblique viewing angles are provided, an angle of one of the at least two specific oblique viewing angles ranges from +30 degrees to +60 degrees or ranges from +120 degrees to +150 degrees, and an angle of an other one of the at least two specific oblique viewing angles ranges from -30 degrees to -60 degrees or ranges from -120 degrees to -150 degrees;
preferably, wherein the at least two specific oblique viewing angles comprise a first specific oblique viewing angle and a second specific oblique viewing angle, an angle of the first specific oblique viewing angle is +45 degrees, and an angle of the second specific oblique viewing angle is -135 degrees.

15. A display device comprising a display panel (100) according to any one of claims 1 to 14.
